# EUROPEAN PATENT APPLICATION

(11) **EP 1 662 728 A1**
(43) Date of publication of application: **31.05.2006**
(21) Application number: 05025982.9
(22) Date of filing: 29.11.2005
(51) Int. Cl.: H04L 12/56, H04M 1/725

(54) **Method and apparatus for determining mobile terminal GPRS connection mode**

(30) Priority: 29.11.2004 KR 2004098797
(71) Applicant: LG Electronics Inc., Yongdungpo-gu Seoul (KR)
(72) Inventor: Shin, Jae-Yong, Bupyeong-Gu Incheon (KR)
(74) Representative: Katérle, Axel

(57) **Abstract**

A method for determining a GPRS mobile terminal connection mode is disclosed. Whenever a GPRS data service is requested, a mobile terminal counts the number of attempted of GPRS connections and the number of successful GPRS connections to calculate a GPRS connection rate, compares the calculated connection rate with a predetermined connection rate. If the calculated connection rate is greater than the predetermined connection rate, the mobile terminal changes the GPRS connection mode to a 'when needed mode', whereas if the calculated connection rate is not greater than the predetermined connection rate, the mobile terminal changes the GPRS connection mode to an 'always on mode'. Accordingly, by changing the connection mode in a GPRS network, network resources can be better utilized and the connection rates can be increased.

## Description

### FIELD OF THE INVENTION

The present invention relates to a mobile terminal data service using a General Packet Radio Service (GPRS) network and, more particularly, to a method for changing and setting a GPRS connection mode of a mobile terminal for a data service using the GPRS network.

### BACKGROUND OF THE INVENTION

In general, the GPRS is a packet switched data service related to techniques of a European digital mobile telephone network (i.e., Global System for Mobile Communications: GSM). Data transmission methods can be divided into a Circuit Switched Data (CSD) method using a call transmission method of a general GSM network, and a GPRS data service method using a GPRS network for transmitting data only.

In case of the GPRS data service, a mobile terminal must be first connected with the GPRS network before transmission of data packets, and there are two modes for connecting the mobile terminal with the GPRS network: the 'when needed mode' is when the mobile terminal attempts a GPRS data service, resources are allocated and the terminal is connected with the GPRS network; and the 'always on mode' is when the mobile terminal is turned on, GPRS resources are automatically allocated to allow the mobile terminal to be connected with the GPRS network.

When the mobile terminal is in an ON state in the 'always on mode', the GPRS resources are always allocated to the mobile terminal, and a GPRS data service connection rate is relatively high compared with a connection rate of the 'when needed mode'. However, the 'always on mode' is disadvantageous since the GPRS resources are allocated to the mobile terminal constantly, the use of resources may be ineffective.

In general, the mobile terminal GPRS connection mode is set and fixed in advance. Once the mobile terminal is set in the 'when needed mode', it stays in the 'when needed mode' even if the GPRS data service connection rate is low. Therefore, the GPRS resources and connection rate may not be efficient when the mobile terminal GPRS connection mode does not respond to various changes in the network.

### BRIEF DESCRIPTION OF THE INVENTION

Therefore, an object of the present invention is to provide a method for changing a GPRS mobile terminal connection mode, thereby increasing the efficiency of GPRS resources and the connection rate.

To achieve at least the above objects in whole or in parts, a method is provided for changing a GPRS connection mobile terminal mode comprising: calculating a GPRS connection rate whenever a GPRS data service is requested; and automatically changing a GPRS connection mode according to a result of a comparison between the calculated connection rate and a predetermined connection rate.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The invention will be described in detail with reference to the following drawings in which like reference numerals refer to like elements, wherein:
Figure 1 illustrates a method for calculating a GPRS connection rate of mobile terminal when a GPRS connection mode is 'when needed mode' in accordance with the present invention;
Figure 2 is a flow chart illustrating processes of a method for changing the GPRS connection mode of the mobile terminal in accordance with the present invention; and
Figure 3 illustrates a method for calculating a GPRS connection rate of a mobile terminal when the GPRS connection mode is 'always on mode' in accordance with the present invention.
Figure 4 is a block diagram of a mobile terminal according to one embodiment of the invention.

### DETAILED DESCRIPTION OF THE EMBODIMENTS

The present invention provides a mobile terminal calculates a connection rate for a GPRS data service by counting the number of connection attempts and the number successful connections, and changes the GPRS connection mode according to a result of a comparison between the calculated connection rate and a predetermined connection rate.

An exemplary embodiment of the present invention will now be described with reference to the accompanying drawings.

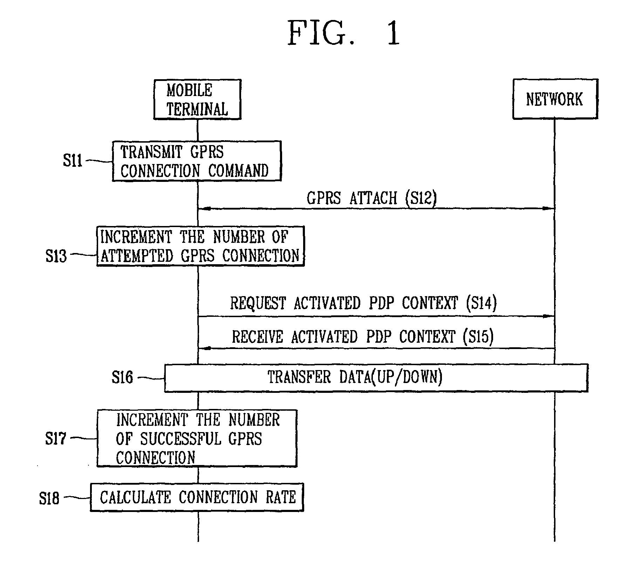

Referring to Figure 1, a method for calculating a GPRS connection rate of the mobile terminal will now be described, wherein Figure 1 illustrates one method for calculating a GPRS connection rate of a mobile terminal when a GPRS connection mode is 'when needed' in accordance with the present invention. Calculating the GPRS connection rate comprises dividing the number of successful connections by the number of attempted connections. Counting the number of successful connections and the number of attempted connections may be determined by incrementing a count for each of the successful connections and attempted connections.

The mobile terminal requests connection to a GPRS network (step S11) and the network responds by performing a GPRS Attach procedure (step S12). In detail, the mobile terminal transmits information similar to an International Mobile Subscriber Identity (IMSI) attach procedure used for a circuit switched GSM services to the GPRS network thereby allowing the GPRS network to recognize the mobile terminal and to request allocation of GPRS resources. The GPRS network authenticates the mobile terminal, copies the user profile to a Serving GPRS Support Node (SGSN) of the GPRS network from a Home Location Register (HLR), and allocates a Packet Temporary Mobile Subscriber Identity (P-TMSI) to the mobile terminal.

Whenever the mobile terminal attempts connection to the GPRS, it counts the number of connection attempts (step S13).

Having been allocated GPRS resources, the mobile terminal requests an activated Packet Data Protocol (PDP) context from the GPRS network in order to establish a session for transmitting and receiving data packets to and from the GPRS network or an external packet data network (PDN) (step S14). The PDP context includes at least a PDP type, a PDP address allocated to a terminal, a request QoS, and an access point (AP) for connection with an external network. In case that the PDP type is an IP network (e.g., IPv4), the PDP address indicates an IP address. The AP indicates an address of a Gateway GPRS Support Node (GGSN).

Then, the GPRS network activates the PDP context and transmits the activated PDP context through an 'ACTIVATE PDP CONTEXT ACCEPT' procedure (step S15). When the mobile terminal receives the activated PDP context, the terminal can transfer data packets through the GPRS network (step S16).

When GPRS connection is successful, the mobile terminal counts the number of GPRS connections (step S17). The mobile terminal then calculates a GPRS connection rate by dividing the number of successful connections by the number of attempted connections (step S18).

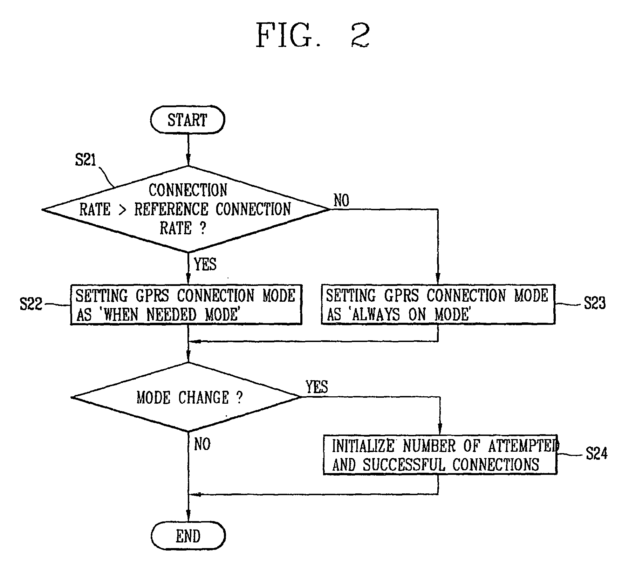

The mobile terminal changes the GPRS connection mode according to the result of the comparison between the calculated GPRS connection rate and a reference connection rate. Figure 2 is a flow chart illustrating processes of one method for automatically changing the GPRS connection mode of the mobile terminal in accordance with the present invention.

After the mobile terminal compares the connection rate and the reference connection rate (step S21), if the connection rate is greater than the reference connection rate, the mobile terminal maintains the GPRS connection mode as the 'when needed mode' (step S22).

If, however, the calculated connection rate is not greater than the reference connection rate, the mobile terminal changes the GPRS connection mode to the 'always on mode' (step S23). The mobile terminal then initializes the number of times of attempted connections and the number of successful connections (step S24), and requests allocation of GPRS resources for the GPRS network according to the 'always on mode' for GPRS connection.

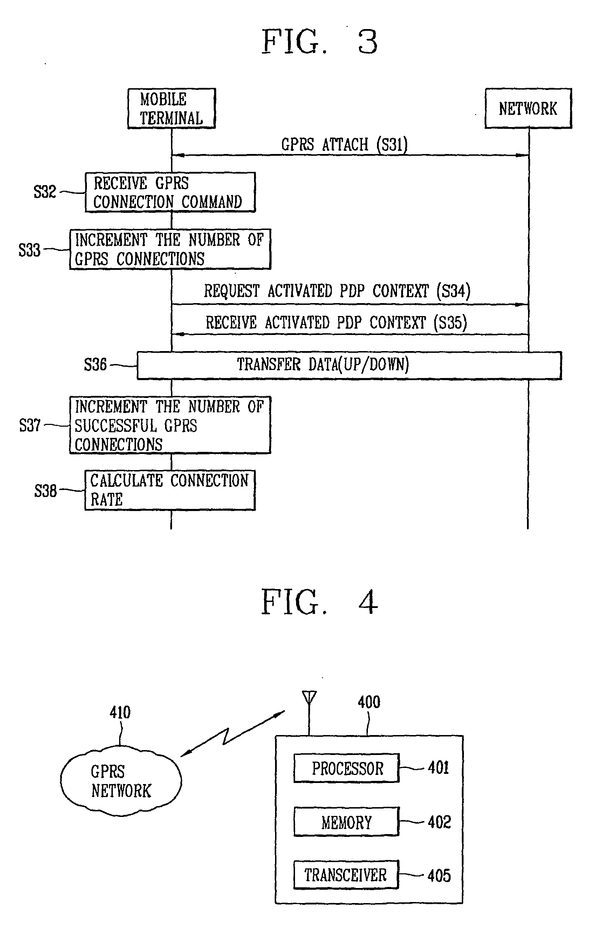

Figure 3 illustrates one method for calculating a GPRS connection rate of a mobile terminal when the GPRS connection mode is 'always on' in accordance with the present invention.

First, the mobile terminal performs a GPRS Attach procedure with the GPRS network. Namely, the mobile terminal requests allocation of GPRS resources from the GPRS network, and the GPRS network allocates GPRS resources to the mobile terminal (step S31).

Thereafter, when a GPRS connection command for a GPRS data service is received from the user, the mobile terminal counts the number of attempted of GPRS connections (step S33) and requests an activated PDP context from the GPRS network (step S34). Then, the GPRS network provides the activated PDP context to the mobile terminal (step S35), so that the mobile terminal and the GPRS network can transfer data packets (step S36).

The mobile terminal counts the number of successful GPRS connections (step S37) and calculates a GPRS connection rate based on the number of attempted GPRS connections and the number of successful GPRS connections (step S38).

As shown in Figure 2, the mobile terminal changes the GPRS connection mode according to a result of comparison between the calculated success rate and the reference connection rate.

If the calculated connection rate is greater than the reference connection rate (step S21), the mobile terminal changes the GPRS connection mode to the 'when needed mode' (step S22) and initializes the number attempted connections and the number successful connections (step 24). If the calculated connection rate is not greater than the reference connection rate, the mobile terminal maintains the current GPRS connection mode as the'always on mode' (step S23)

When a new GPRS connection command is attempted, the mobile terminal accumulates the number attempted connections up to a certain value, and counts the number of times of successful GPRS connections. The certain value can be 5 or 6. The certain value, that is, the maximum number attempted connections can be changed according to a radio environment or radio resources.

In this manner, the mobile terminal calculates the GPRS connection rate whenever it attempts a GPRS connection, and when the mobile terminal moves into an area with abundant GPRS resources, it is allocated the GPRS resources according to the 'when needed mode', whereas when the mobile terminal moves into an area with meager GPRS resources, it is allocated the GPRS resources according to the 'always on mode'.

Referring now to Figure 4, the present invention provides a mobile terminal 400 that supports packet switched data service communications, the terminal comprising: a transceiver 405 to send and receive data with a packet switched data service network 410; a memory 402 to store information therein; and a processor 401 and memory 402 cooperating with the transceiver 405 to establish a packet switched data service connection, to calculate a packet switched data service connection rate during the packet switched data service connection, and to determine whether the packet switched data service connection mode should be changed according to the calculated packet switched data service connection rate.

The terminal 400 establishes a network connection using a first packet switched data service connection mode, which is continuously employed if the calculated packet switched data service connection rate indicate favorable packet switched data service network connection conditions. The terminal 400 establishes the network connection using a second packet switched data service connection mode if the calculated packet switched data service connection rate indicates unfavorable packet switched data service network connection conditions.

The first packet switched data service connection mode connects with the packet switched data service network 410 only when needed, and the second packet switched data service connection mode is always connected with the packet switched data service network 410.

To determine which connection mode to use, the terminal 400 compares the calculated packet switched data service connection rate with a threshold packet switched data service connection rate stored in the memory 402. The packet switched data service connection rate can be based upon the number of packet switched data service connection attempts and the number of packet switched data service connections. The packet switched data service can be a General Packet Radio Service (GPRS).

As so far described, the method for changing a GPRS mobile terminal connection mode in accordance with the present invention has the following advantages. The mobile terminal 400 calculates the GPRS connection rate whenever attempting to connect with the GPRS network 410, thereby immediately detecting changes in the GPRS network 410 according to characteristics of an area or region, and since a GPRS connection mode can be changed according to the GPRS network conditions, the efficiency of the GPRS resources and the connection rate can be increased.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method for changing a mobile terminal GPRS connection mode, the method comprising:
calculating a GPRS connection rate whenever a GPRS data service is requested; and
changing between a first GPRS connection mode and a second GPRS connection mode responsive to a comparison between the calculated connection rate and a predetermined connection rate.

2. The method of claim 1, wherein calculating the GPRS connection rate comprises:
counting the number of attempted GPRS connections and the number of successful GPRS connections whenever the GPRS data service is requested; and
dividing the number of successful GPRS connections by the number of attempted connections.

3. The method of claim 2, wherein the number of attempted GPRS connections is incremented upon each attempted connection, and the number of successful GPRS connections is incremented upon each successful connection.

4. The method of claim 1, wherein changing the GPRS connection mode comprises:
setting the GPRS connection mode to the first mode if the calculated connection rate is greater than the predetermined connection rate; and
setting the GPRS connection mode to the second mode if the calculated connection rate is not greater than the predetermined connection rate.

5. The method of claim 4, wherein changing further comprises initializing the number of attempted connections and initializing the number of successful connections if the GPRS connection mode was changed.

6. The terminal of claim 4, wherein the first connection mode is to connect with the network only when needed, and the second connection mode is to always remain connected with the network.

7. A method for changing a GPRS mobile terminal connection mode when the connection mode is 'when needed, the method comprising:
requesting a session connection for transferring data with the GPRS network;
counting each attempted GPRS connection;
counting each successful GPRS connection;
calculating a GPRS connection rate by dividing the number of attempted GPRS connections into the number of successful GPRS connections; and
maintaining the 'when needed' connection mode if the calculated connection rate is greater than a predetermined connection rate, else changing the GPRS connection mode to 'always on' and initializing the number of attempted GPRS connections and the number of successful GPRS connections.

8. A method for changing a GPRS mobile terminal connection mode when the connection mode is 'always on, the method comprising:
requesting a session connection for transferring data with the GPRS network;
counting each attempted GPRS connections;
counting each successful GPRS connections;
calculating a GPRS connection rate by dividing the number of attempted GPRS connections into the number of successful GPRS connections;
maintaining the 'always on connection mode if the calculated connection rate is not greater than the predetermined connection rate, else changing the connection mode to 'when needed mode' and initializing the number of attempted GPRS connections and the number of successful GPRS connections.

9. A mobile terminal for communicating with a packet switched data service network, the terminal comprising:
a transceiver for establishing a connection with the packet switched data service network, wherein the transceiver exchanges data with the network; and
a processor coupled with the transceiver for determining a connection mode with the packet switched data service network and for establishing the connection with the network, wherein the processor calculates a connection rate and determines the connection mode responsive to the connection rate.

10. The terminal of claim 9, wherein the processor counts the number of attempted connections, counts the number of successful connections, and divides the number of successful connections by the number of attempted connections thereby calculating the connection rate.

11. The terminal of claim 10, wherein the terminal establishes the network connection using a first connection mode, wherein subsequent network connections are established using the first connection mode if the connection rate is favorable or a second connection mode when the connection rate is not favorable.

12. The terminal of claim 11, wherein the number of attempted connections and the number of successful connections are initialized when changing from the first connection mode to the second connection mode, or from the second connection mode to the first connection mode.

13. The terminal of claim 11, wherein the first connection mode is to connect with the network only when needed, and the second connection mode is to always remain connected with the network.

14. The terminal of claim 11, wherein the connection rate is favorable when it is greater than a predetermined connection rate, and the connection rate is not favorable when it is not greater that the predetermined connection rate.

15. The terminal of claim 9, wherein the packet switched data service is a General Packet Radio Service.
